# EUROPEAN PATENT APPLICATION

(11) **EP 4 357 272 A1**
(43) Date of publication of application: **24.04.2024**
(21) Application number: 22852836.0
(22) Date of filing: 20.07.2022
(51) Int. Cl.: B65G 15/58, B65G 15/42

(54) **CONVEYANCE BELT AND CONVEYANCE APPARATUS**

(30) Priority: 05.08.2021 JP 2021128684
(71) Applicant: Qualicaps Co., Ltd., Nara 639-1032 (JP)
(72) Inventor: KASAI Kenichi, Yamatokoriyama-shi, Nara 639-1032 (JP)
(74) Representative: Isarpatent
(86) International application number: PCT/JP2022/028159
(87) International publication number: WO 2023/013412

(57) **Abstract**

Provided is a conveyance belt 50 that includes: a band-shaped belt body 51; a groove portion 52 extending in a longitudinal direction of the belt body 51; and an air intake portion 53 formed on a bottom surface of the groove portion 52. The conveyance belt 50 has retaining portions 54 and 55 for retaining a small article 90 at rims on both sides of the groove portion 52. The retaining portions 54 and 55 are formed in a thin wall shape by cutouts 56 and 57 that are formed in the belt body 51 along a longitudinal direction of the groove portion 52, the retaining portions 54 and 55 being flexible and deformable toward the cutouts 56 and 57. The cutouts 56 and 57 are preferably formed on the side opposite to the groove portion 52 across the retaining portions 54 and 55.

## Description

### Technical Field

The present invention relates to a conveyance belt and a conveyance apparatus, and more particularly to a conveyance belt and a conveyance apparatus used for conveying a small article (for example, a solid preparation such as a tablet or a capsule).

### Background Art

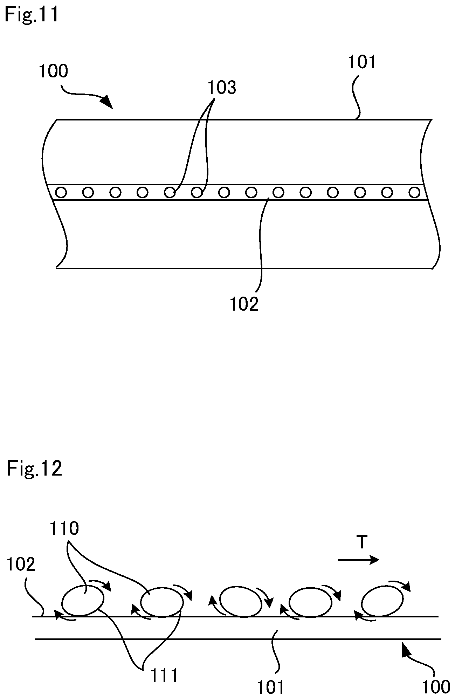

As a belt for conveying a solid preparation such as a tablet, Patent Literature 1 discloses a conveyance belt 100 including a band-shaped belt body 101, a groove 102 extending in a longitudinal direction of the belt body 101, and a plurality of air intake holes 103 formed in a bottom surface of the groove 102 as illustrated in a plan view of FIG. 11. The conveyance belt 100 adsorbs the tablet on the surface of the belt body 101 by suction from the back surface side of the belt body 101 through the air intake holes 103 and the groove 102 and conveys the tablet, and inspection and printing of the tablet can be performed during conveyance.

### Citation List

### Patent Literature

Patent Literature 1: WO 2014/013973 A

### Summary of Invention

### Technical Problem

In the conventional conveyance belt 100 described above, when a solid preparation 110 to be conveyed has a shape with a curved surface 111 such as an elliptical shape in a side view and the curved surface 111 is adsorbed and retained in the groove 102 of the conveyance belt 100, the solid preparation 110 comes into contact with the groove 102 at two points on both sides in the width direction of the groove 102, and thus the solid preparation 110 may sway back and forth in a conveyance direction T during conveyance as illustrated in a side view of FIG. 12. For this reason, the position of the tablet changes during the inspection or printing of the solid preparation 110, so that the inspection accuracy and the printing accuracy may be deteriorated.

On the other hand, in a case where the conveyance belt 100 is formed of a soft material that is easily elastically deformed, the sway of the solid preparation 110 is suppressed by an increase in the contact area due to the deformation of a section of the conveyance belt 100 in contact with the solid preparation 110. However, the entire conveyance belt 100 is easily deformed due to a decrease in rigidity, and in this case as well, it may be difficult to stably convey the tablet.

In view of this, an object of the present invention is to provide a conveyance belt and a conveyance apparatus capable of stably conveying a small article such as a solid preparation. Solution to Problem

The object of the present invention is achieved by a conveyance belt including: a band-shaped belt body; a groove portion extending in a longitudinal direction of the belt body; and an air intake portion formed on a bottom surface of the groove portion, the conveyance belt including retaining portions for retaining a small article at rims on both sides of the groove portion, wherein the retaining portions are formed in a thin wall shape by a cutout that is formed in the belt body along a longitudinal direction of the groove portion, the retaining portions being flexible and deformable toward the cutout.

In the conveyance belt, the cutout can be formed on a side opposite to the groove portion across the retaining portions. The cutout is preferably formed in an arc shape in a cross section.

Alternatively, the cutout may be formed so as to cut out a side surface of the groove portion.

In addition, the object of the present invention is achieved by a conveyance apparatus including the conveyance belt described above, a first pulley, a second pulley, and a suction device, the conveyance belt being formed in an endless shape and stretched between the first pulley and the second pulley, the conveyance apparatus bringing a small article into close contact with the retaining portions by suction of the suction device in at least a part of a conveyance path. Advantageous Effects of Invention

The present invention can provide a conveyance belt and a conveyance apparatus capable of stably conveying a small article regardless of the shape thereof.

### Brief Description of Drawings

FIG. 1 is a schematic front view of a conveyance apparatus according to an embodiment of the present invention.
FIG. 2 is a cross-sectional view taken along line A-A in FIG. 1.
FIG. 3 is a perspective view of a main part of a conveyance belt according to the embodiment of the present invention.
FIG. 4 is a cross-sectional view of a main part of the conveyance belt illustrated in FIG. 3.
FIG. 5 is a cross-sectional view of a main part showing a state in which a solid preparation is retained on the conveyance belt illustrated in FIG. 4.
FIG. 6 is a cross-sectional view of a main part of a modification of the conveyance belt illustrated in FIG. 4.
FIG. 7 is a perspective view of a main part of a conveyance belt according to another embodiment of the present invention.
FIG. 8 is a cross-sectional view of a main part of the conveyance belt illustrated in FIG. 7.
FIG. 9 is a cross-sectional view of a main part showing a state in which a solid preparation is retained on the conveyance belt illustrated in FIG. 8.
FIG. 10 is a cross-sectional view of a main part of a modification of the conveyance belt illustrated in FIG. 8.
FIG. 11 is a plan view of a main part of a conventional conveyance belt.
FIG. 12 is a side view of a main part of the conveyance belt illustrated in FIG. 11.

### Description of Embodiments

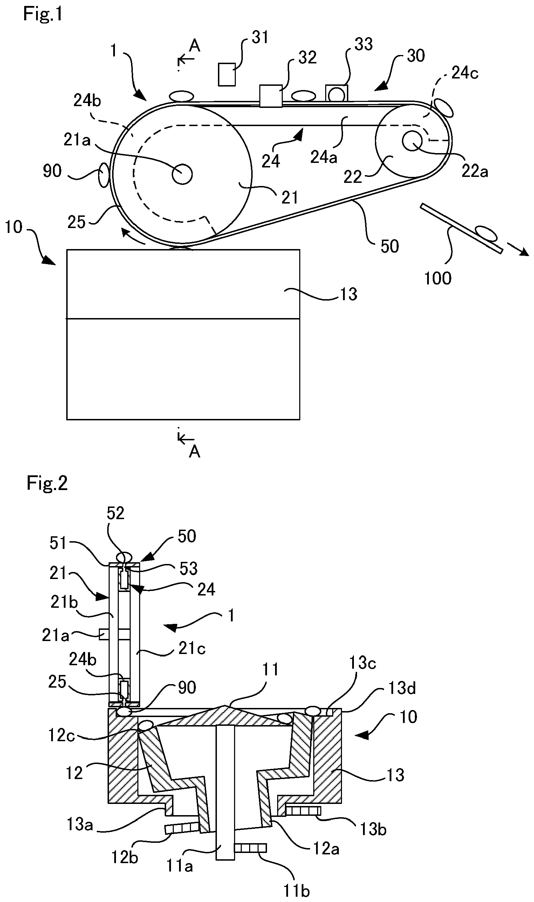

Embodiments of the present invention will be described below with reference to the accompanying drawings. FIG. 1 is a schematic front view of a conveyance apparatus according to an embodiment of the present invention. A conveyance apparatus 1 illustrated in FIG. 1 can adsorb and convey a solid preparation 90 such as a tablet or a capsule supplied from a supply device 10.

FIG. 2 is a cross-sectional view taken along line A-A in FIG. 1. As illustrated in FIG. 2, the supply device 10 includes an umbrella-shaped disk 11, an intermediate ring 12 that accommodates the disk 11, and a rotation ring 13 that accommodates the intermediate ring 12.

While rotation shafts 11a and 13a of the disk 11 and the rotation ring 13 extend in the vertical direction, a rotation shaft 12a of the intermediate ring 12 is disposed so as to be slightly inclined with respect to the rotation shafts 11a and 13a. The rotation shafts 11a, 12a, and 13a are connected to drive sources (not illustrated) such as motors individually provided via speed reducers 11b, 12b, and 13b, respectively, and can independently rotationally drive the disk 11, the intermediate ring 12, and the rotation ring 13.

Conveyance portions 12c and 13c are formed on top parts of the intermediate ring 12 and the rotation ring 13, respectively, along the circumferential direction. The radially outer side of the conveyance portion 13c of the rotation ring 13 is covered with a ring-shaped protrusion 13d.

As illustrated in FIG. 1, the conveyance apparatus 1 includes a first pulley 21 and a second pulley 22 that respectively have rotation shafts 21a and 22a arranged horizontally, an endless band-shaped conveyance belt 50 stretched between the first pulley 21 and the second pulley 22, and a suction device 24 disposed along a conveyance direction of the conveyance belt 50. The diameter of the second pulley 22 is smaller than the diameter of the first pulley 21. A linear portion of the conveyance belt 50 located between the first pulley 21 and the second pulley 22 is horizontal above the first pulley 21 and the second pulley 22 and is inclined below the first pulley 21 and the second pulley 22.

As illustrated in FIG. 2, the first pulley 21 includes two circular plates 21b and 21c that are spaced from each other and are connected to each other with the rotation shaft 21a. Similar to the first pulley 21, the second pulley 22 also includes two circular plates spaced from each other and connected with the rotation shaft 22a. In the present embodiment, the first pulley 21 is a driving pulley connected to a drive motor (not illustrated), and the second pulley 22 is a driven pulley. However, the first pulley 21 may be a driven pulley, and the second pulley 22 may be a driving pulley.

The conveyance belt 50 includes a band-shaped belt body 51 having a rectangular cross section, a groove portion 52 extending in the longitudinal direction of the belt body 51, and an air intake portion 53 formed in the bottom surface of the groove portion 52, and the groove portion 52 is disposed between the circular plates 21b and 21c of the first pulley 21.

As illustrated in FIG. 1, the suction device 24 includes a linear portion 24a disposed near and immediately below the conveyance belt 50 extending horizontally between the first pulley 21 and the second pulley 22, and arc portions 24b and 24c provided on both sides of the linear portion 24a in the conveyance direction. The arc portions 24b and 24c are inserted between two circular plates of the first pulley 21 and between two circular plates of the second pulley 22, respectively, and are curved in an arc shape along the conveyance belt 50 stretched between the first pulley 21 and the second pulley 22.

As illustrated in FIG. 2, the suction device 24 is formed in a hollow cylindrical shape, and a slit-shaped suction portion 25 is formed along the groove portion 52 at a section where the suction device 24 faces the groove portion 52 of the conveyance belt 50. The suction device 24 can be depressurized by operation of a vacuum pump (not illustrated), and can suction the solid preparation 90 via the air intake portion 53 of the conveyance belt 50, whereby the solid preparation 90 can be adsorbed on the conveyance belt 50 and conveyed along with the conveyance belt 50.

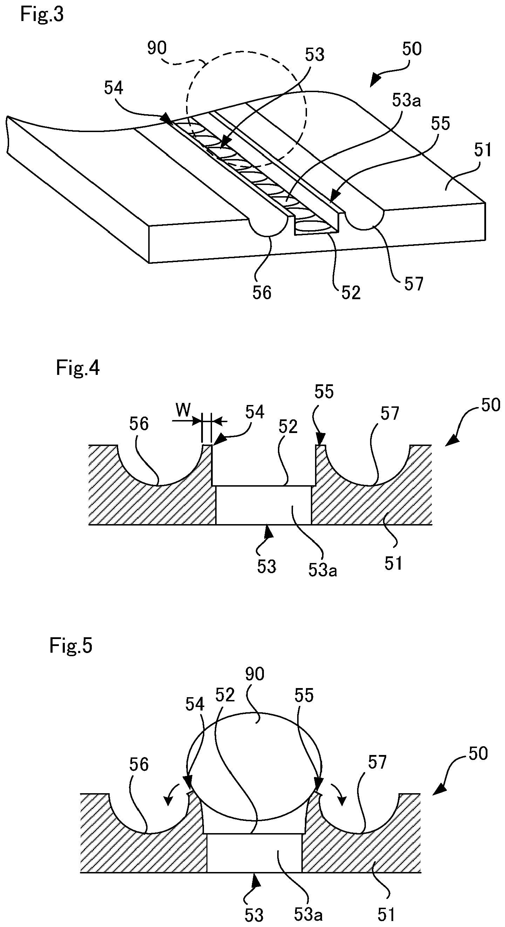

FIG. 3 is a perspective view of a main part of the conveyance belt 50, and FIG. 4 is a cross-sectional view of the main part of the conveyance belt 50 illustrated in FIG. 3. As illustrated in FIGS. 3 and 4, the groove portion 52 has a rectangular cross section, and is formed on the surface side at the center of the belt body 51 in the width direction. The air intake portion 53 includes a plurality of air intake holes 53a penetrating the bottom surface of the groove portion 52 to the back surface side. The air intake holes 53a are formed at equal intervals along the longitudinal direction of the groove portion 52.

Retaining portions 54 and 55 that retain the solid preparation 90 indicated by a broken line in contact therewith are formed along the longitudinal direction of the groove portion 52 at rims on both sides of the groove portion 52 in the width direction. The retaining portions 54 and 55 are formed in a thin wall shape by cutouts 56 and 57 formed in the belt body 51 so as to be spaced from each other across the groove portion 52, and are raised upright with respect to the bottom surface of the groove portion 52. The cutouts 56 and 57 are formed to have a semicircular cross section, and the retaining portions 54 and 55 are formed such that the thickness in the width direction gradually increases from the tip toward the base end.

Next, the operation of the conveyance apparatus 1 having the above configuration will be described. When multiple solid preparations 90 such as tablets and capsules are supplied onto the disk 11 with the disk 11, the intermediate ring 12, and the rotation ring 13 of the supply device 10 being rotated in the same direction, the solid preparations 90 receive a centrifugal force and move to the conveyance portion 13c of the rotation ring 13 through the conveyance portion 12c of the intermediate ring 12. In this way, the solid preparations 90 can be aligned in a row in the conveyance portion 13c and conveyed in the rotation direction of the rotation ring 13.

The solid preparations 90 aligned and conveyed in the supply device 10 are sequentially adsorbed on the conveyance belt 50 in the vicinity of the lower portion of the first pulley 21 by the suction of the suction portion 25 of the conveyance apparatus 1, are moved up, and are linearly conveyed above the first pulley 21 and the second pulley 22 while being adsorbed. An appearance inspection device 30 that inspects the appearance of the solid preparation 90 is disposed in a section where the solid preparation 90 is linearly conveyed by the conveyance apparatus 1 as illustrated in FIG. 1. The appearance inspection device 30 includes a sensor 31 that detects approach of the solid preparation 90 conveyed by the conveyance apparatus 1, and imaging devices 32 and 33 that respectively capture images of both sides in the horizontal direction of the solid preparation 90 detected by the sensor 31. The appearance inspection device can accurately inspect the side surfaces of the solid preparation 90 with the solid preparation 90 being kept adsorbed on the conveyance belt 50 up to imaging positions of the imaging devices 32 and 33. Alternatively, printing can be performed on the side surface of the solid preparation 90 by disposing a printing device instead of the imaging devices 32 and 33.

It is only sufficient that the suction device 24 is formed from the position where the solid preparation 90 is adsorbed to the conveyance belt 50 in the arc portion 24b to a necessary portion (for example, a portion where the appearance inspection or printing of the solid preparation 90 is completed) of the linear portion 24a, and it is only sufficient that the suction device 24 has a configuration of allowing the solid preparation 90 to be adsorbed to the conveyance belt 50 in at least a part of a conveyance path. The solid preparation 90 after the appearance inspection falls from the conveyance belt 50, is discharged from a discharge chute 100 illustrated in FIG. 1, and is sent to the next step.

As illustrated in FIG. 5, the solid preparation 90 is sucked from the back surface side of the conveyance belt 50 with the air intake portion 53, and is retained by the retaining portions 54 and 55. The retaining portions 54 and 55 are flexed and deformed as indicated by arrows toward the cutouts 56 and 57 formed on the side opposite to the groove portion 52 by the weight of the solid preparation 90 and action of suction. As a result, the solid preparation 90 comes into contact with the side surface of the groove portion 52 which is the inner surface side of the retaining portions 54 and 55 (for example, comes in line contact with the side surface along the longitudinal direction of the groove portion 52) in a wide range, and thus, it is possible to suppress sway of the solid preparation 90 during conveyance without excessively increasing a suction pressure, and to convey the solid preparation 90 in a stable position. Therefore, the inspection accuracy of the solid preparation 90 by the appearance inspection device 30 can be satisfactorily maintained. Alternatively, when a printing device is disposed instead of the appearance inspection device 30, the printing accuracy of the solid preparation 90 can be satisfactorily maintained.

The belt body 51 is preferably formed of a soft material such as silicone rubber or urethane rubber. When the hardness of the belt body 51 is too low, it is likely to be difficult for the retaining portions 54 and 55 to retain the solid preparation 90. On the other hand, when the hardness is too high, the retaining portions 54 and 55 are unlikely to be flexed and deformed. Therefore, the belt body 51 preferably has a Shore A hardness of, for example, 50 degrees to 70 degrees. Regarding the thickness, the retaining portions 54 and 55 also preferably have appropriate thicknesses so that they reliably retain the solid preparation 90 with the flex and deformation thereof toward the cutouts 56 and 57 being promoted. For example, a thickness W at the tip of the retaining portion 54 is preferably 0.1 mm to 2.0 mm, and more preferably 0.1 mm to 1.0 mm as illustrated in FIG. 4.

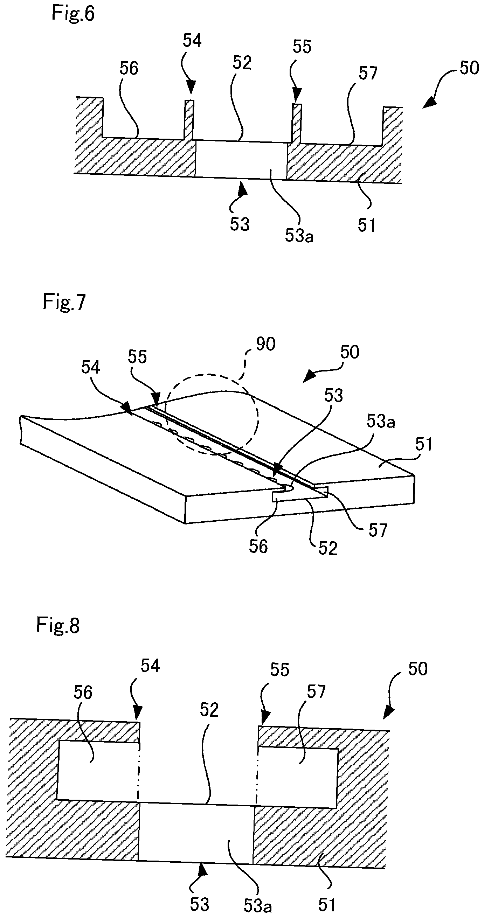

The cross-sectional shapes of the cutouts 56 and 57 are preferably arcuate as in the present embodiment. This configuration can increase the thickness of the retaining portions 54 and 55 on the base side to improve the strength and promote the flex and deformation of the retaining portions 54 and 55 on the tip side. Furthermore, since no corner portion is generated in the retaining portions 54 and 55, damage due to stress concentration and accumulation of dust can be suppressed. It is to be noted, however, that the cross-sectional shapes of the cutouts 56 and 57 are not necessarily limited to an arc shape. For example, as illustrated in FIG. 6, the cross-sectional shapes of the cutouts 56 and 57 may be rectangular, and the thicknesses of the retaining portions 54 and 55 may be entirely constant. Alternatively, the cross-sectional shapes of the cutouts 56 and 57 may be a triangular shape, a pentagonal shape, or a higher-order polygonal shape so that the thicknesses of the retaining portions 54 and 55 change in the height direction.

While one embodiment of the present invention has been described in detail above, specific aspects of the present invention are not limited to the above embodiment. For example, although the cutouts 56 and 57 are formed on the side opposite to the groove portion 52 across the retaining portions 54 and 55 in the present embodiment, other configurations may be applied as long as the retaining portions 54 and 55 formed in a thin wall shape by the cutouts 56 and 57 can be flexed and deformed toward the cutouts 56 and 57.

FIG. 7 is a perspective view of a main part of a conveyance belt 50 according to another embodiment of the present invention, and FIG. 8 is a cross-sectional view of the main part of the conveyance belt 50 illustrated in FIG. 7. In the conveyance belt 50 illustrated in FIGS. 7 and 8, cutouts 56 and 57 are formed by cutting a section indicated by a dash-dot-dot line illustrated in FIG. 8 with respect to the side surfaces of a groove portion 52 that is formed along the longitudinal direction at the center of the belt body 51 in the width direction and that has a rectangular cross section, the cutouts 56 and 57 extending along the longitudinal direction of the groove portion 52. The retaining portions 54 and 55 are formed in a thin wall shape extending substantially parallel to the bottom surface of the groove portion 52 by the cutouts 56 and 57. The air intake portion 53 includes a plurality of air intake holes 53a penetrating the bottom surface of the groove portion 52 to the back surface side.

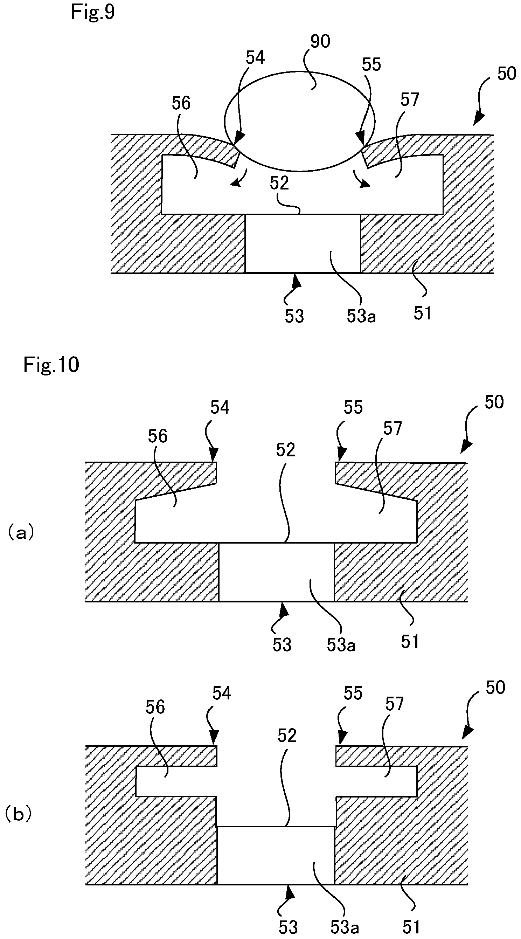

As illustrated in FIG. 9, the solid preparation 90 is sucked from the back surface side of the conveyance belt 50 with the air intake portion 53, and is retained by the retaining portions 54 and 55. The retaining portions 54 and 55 are flexed and deformed as indicated by arrows toward the cutouts 56 and 57 formed below the retaining portions 54 and 55 by the weight of the solid preparation 90 and action of suction. As a result, the solid preparation 90 comes into contact with the surface of the belt body 51 which is the surface side of the retaining portions 54 and 55 (for example, comes in line contact with the surface along the longitudinal direction of the groove portion 52) in a wide range, and thus, it is possible to suppress sway of the solid preparation 90 during conveyance without excessively increasing a suction pressure, and to convey the solid preparation 90 in a stable position.

The cutouts 56 and 57 illustrated in FIG. 8 are formed so as to cut out the entire side surfaces of the groove portion 52, but the cross-sectional shapes and sizes of the cutouts 56 and 57 are not particularly limited. For example, the cutouts 56 and 57 may be formed to have a trapezoidal cross section such that the retaining portions 54 and 55 are tapered from the base end toward the tip in the horizontal direction as illustrated in FIG. 10(a). Alternatively, the cutouts 56 and 57 can be formed so as to cut out only the central parts of the side surfaces of the groove portion 52 in the depth direction as illustrated in FIG. 10(b).

The conveyance belt 50 is not necessarily integrated, and for example, can be formed by arranging a pair of split belts which is laterally symmetrical in parallel in the width direction, and the conveyance apparatus 1 can operate each of the split belts at synchronized timing.

The type of the solid preparation 90 adsorbed and conveyed by the conveyance belt 50 is not particularly limited, and the solid preparation 90 may be a tablet or a capsule, but the present invention is particularly effective when the solid preparation has a curved shape along the longitudinal direction which is the conveyance direction. Preferable examples thereof include soft capsules. An object to be conveyed by the conveyance belt 50 is not necessarily limited to the solid preparation 90 as long as the object is a small article that can be retained by the retaining portions 54 and 55 having a thin wall shape and has a size and weight enough to be adsorbed by suction with the air intake portion 53. Examples of such small articles include small foods or small sweets such as solid health foods, candies, gummies, or chocolates, and small-sized articles made of resin or metal such as parts used in automobiles, electronic devices, various apparatuses, or the like. The weight of the small article is preferably, for example, 50 mg to 2000 mg.

The conveyance belt and the conveyance apparatus according to the present invention can be particularly suitably used for conveying a small article which has a curved surface and thus is likely to sway back and forth in the conveyance direction and to be conveyed in an unstable position. Examples of a shape of such a small article in a side view include a lens shape, a round shape, an oblong shape, an oval shape, a cylindrical shape (ring shape), and a rugby ball shape. When the small article has an elliptical shape in a side view, the long diameter can be 8 mm to 25 mm and the short diameter can be 6 mm to 10 mm, for example. When the small article is circular in a plan view and elliptical in a side view, the diameter in a plan view can be 6 mm to 13 mm, and the thickness in a side view can be 2 mm to 8 mm, for example.

### Reference Signs List

- 1: conveyance apparatus
- 21: first pulley
- 22: second pulley
- 24: suction device
- 50: conveyance belt
- 51: belt body
- 52: groove portion
- 53: air intake portion
- 54, 55: retaining portion
- 56, 57: cutout
- 90: solid preparation (small article)

## Claims

1. A conveyance belt comprising:
a band-shaped belt body;
a groove portion extending in a longitudinal direction of the belt body; and
an air intake portion formed on a bottom surface of the groove portion, the conveyance belt including retaining portions for retaining a small article at rims on both sides of the groove portion, wherein
the retaining portions are formed in a thin wall shape by a cutout that is formed in the belt body along a longitudinal direction of the groove portion, the retaining portions being flexible and deformable toward the cutout.

2. The conveyance belt according to claim 1, wherein the cutout is formed on a side opposite to the groove portion across the retaining portions.

3. The conveyance belt according to claim 2, wherein the cutout is formed in an arc shape in a cross section.

4. The conveyance belt according to claim 1, wherein the cutout is formed so as to cut out a side surface of the groove portion.

5. A conveyance apparatus comprising:
the conveyance belt according to any one of claims 1 to 4;
a first pulley;
a second pulley; and
a suction device,
the conveyance belt being formed in an endless shape and stretched between the first pulley and the second pulley,
the conveyance apparatus bringing a small article into close contact with the retaining portions by suction of the suction device in at least a part of a conveyance path.
